# EUROPEAN PATENT SPECIFICATION

(11) **EP 0 598 297 B1**
(45) Date of publication and mention of the grant of the patent: **24.06.1998**
(21) Application number: 93118050.9
(22) Date of filing: 08.11.1993
(51) Int. Cl.: H04L 12/40

(54) **A polled communications network**
Aufrufdatenübertragungsnetz
Réseau de communication de type d'intérrogation

(30) Priority: 14.11.1992 GB 9223914
(43) Date of publication of application: 25.05.1994
(73) Proprietor: SIEMENS MEASUREMENTS LIMITED, Oldham, Lancashire OL9 7JS (GB)
(72) Inventor: Sheppard, Timothy John, Stockport, Cheshire SK7 3LU (GB); Graham, Ian, Bury, Lancashire BL0 9YB (GB)
(74) Representative: Allen, Derek

(56) References cited:
- EP-A- 0 190 501
- EP-A- 0 367 699
- DE-A- 3 736 081
- GB-A- 2 162 722
- US-A- 4 896 277
- US-A- 5 029 209
- COMPUTER NETWORKS AND ISDN SYSTEMS, vol.11, no.2, February 1986, AMSTERDAM NL pages 133 - 146, XP211676 W.M.LOUCKS ET AL. 'Implementation of a Dynamic Address Assignment Protocol in a Local Area Network'

## Description

In communications networks where the communications medium is such that not all units can hear messages transmitted by all other units due perhaps to high attenuation or high noise levels such as can occur on mains communications networks, a polled master unit-slave unit architecture is often adopted so that all communications are initiated by the master unit to prevent message collisions.

The disadvantage of such systems is that the master unit must be aware of the existence of each slave unit before communications can take place. Where the network configuration is not fixed and the number of slave units under the control of the master unit can change, the need to inform the master unit of the changes can represent a considerable administrative overhead.

Known polled communications networks will now be described with reference to the following patents. In USA Patent No 4,896,277, the polled communications network includes a master unit and a plurality of slave units. The master unit is arranged to send messages to and receive messages from the slave units. The master unit is provided with means for issuing a log-on request message, in the form of a mapping command, which is received by all the slave units. Each slave unit is provided with means for responding to the log-on request message, which generates a return status message, but only responds if the particular slave unit is newly installed on the network and has not communicated previously with the master unit.

In European Patent No 0190501, there is disclosed a broadcast transmission system, in which in normal operation messages and terminal addresses are transmitted between a master station and a plurality of terminals, each having an assigned address. The master station initially assigns the addresses to the terminals. In order to isolate each terminal in turn to assign it an address, the master station varies one or more parameters which effect the bit error rate of the terminals while polling the terminals, and each terminal which receives the poll with an acceptable bit error rate responds to the poll. When the master station receives only one response to a poll, it assigns an address to the responding, isolated, terminal, which thereafter does not respond to the poll.

In USA Patent No 5,029,209, there is disclosed a pseudo-random, interative method and apparatus for automatically creating an address for each remote unit of a data communication network. A network comprises a plurality of remote units and a central unit. The formats of the message frames that control the flow of data between the central unit and the plurality of remote units includes a synchronisation word, a command word and a series of data word segments. The number of data word segments is equal to or greater than the number of remote units. The pseudo random, interative method and apparatus assigns addresses such that one and only one remote unit is associated with the data word segment position.

An object of the present invention is to provide means whereby the master unit can automatically detect the presence of a newly installed slave unit and initiate communications with the newly installed slave unit, ie. 'log-on' the newly installed slave unit to the network, without the need for external intervention.

According to the present invention, there is provided a polled communications network comprising a master unit and a plurality of salve units, the master unit being arranged to send messages to, and receive messages from the slave unit, the master unit is provided with means for issuing a log-on request message which is received by the slave units, and each slave unit is provided with means for responding to the log-on request message, but only responds if the particular slave unit is newly installed on the network and has not communicated previously with the master unit, characterised in that the log-on request message is followed by a plurality of time slots in which the newly installed slave units can respond, and the newly installed slave units include means to randomly select a time slot in which to responds, and the number of time slots following the log-on request message is varied according to the number of time slots in which a response was received in a previous log-on request message.

The present invention will now be described with reference to the accompanying drawings in which:
FIGURE 1 shows a block diagram of a typical communications network incorporating a master unit and a number of slave units;
FIGURES 2 and 3 respectively show a block diagram of a master/slave communications network with one additional slave unit, and with a plurality of additional slave units;
FIGURE 4 shows a log-on request message Format; and,
FIGURE 5 shows two communications networks which may be connected together.

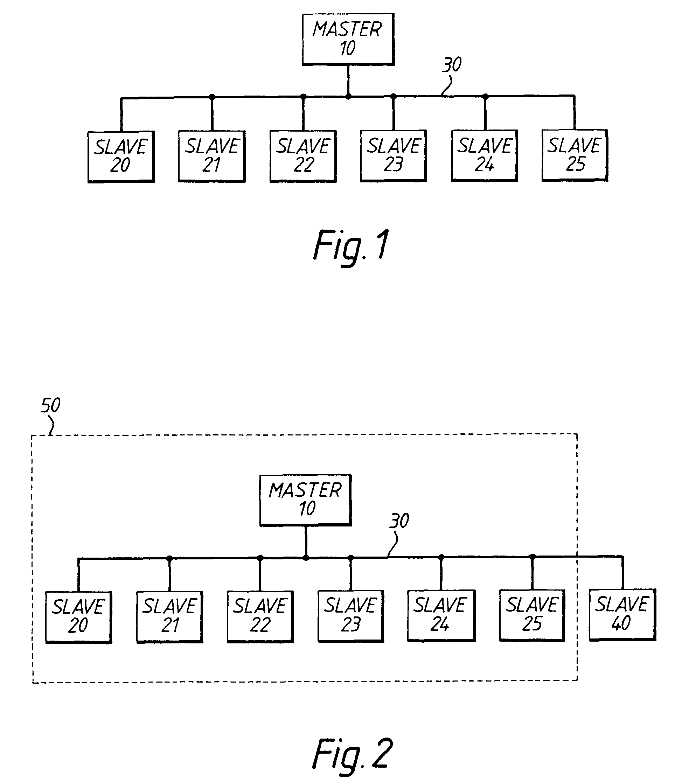

Referring to Figure 1, a simple network with a master unit 10 which controls all communications on the network. A number of slave units 20 to 25 are connected to the master unit 10 for communication therewith. Communication occurs over a communications medium 30 which carries messages between the master unit 10 and the slave units 20 to 25. In the implementation described, this communications medium 30 is shown as a physical connection although the present invention is equally applicable to other media such as radio.

As in a conventional polled network, the master unit 10 initiates each communication with each of the slave units 20 to 25 either in turn or in accordance with a pre-defined priority or other algorithm. In accordance with the present invention, the master unit 10 will also at intervals issue a log-on request message, which is ignored by all the slave units already in communication with the master unit, ie. logged-on to the network, but to which any slave unit not yet in communications with the master unit, ie. not yet logged-on to the network, will respond. The response may be in the form of a carrier signal, a modulated carrier signal or a message.

Thus in the example described above, the master unit 10 will issue the log-on request message which is ignored by the slave units already logged-on to the network 20 to 25 and no unit will respond. The master unit 10 therefore knows that there are no newly installed slave units to log-on to the network.

Figure 2 shows the network 50 from Figure 1, with an additional newly installed slave unit 40. In this case, when the master unit 10 issues the log-on request message, the slave units already logged-on to the network 20 to 25 will again ignore it, but the newly installed slave unit 40 will respond. The master unit knows in this case that a newly installed slave unit has been added to the network and it can log-on the newly installed slave unit 40 to the network.

The log-on process will normally vary according to the specific requirements of each application, but will typically involve the following stages:
a) The newly installed slave unit 40 will respond to the log-on request message.
b) The master unit 10 will acknowledge the response and request the identity of the newly installed slave unit 40.
c) The newly installed slave unit 40 will respond with its identity.
d) The master unit 10 will add the newly installed slave unit 40 to its list of units to communicate with, and acknowledges the receipt of the newly installed slave unit identity.
e) The newly installed slave unit will set an internal marker or flag to inhibit it responding to future log-on request messages.

In some applications of the present invention, additional stages may be added to the log-on process or stages may be combined according to the level of security, reliability and time constraints required by that application. For example, the newly installed slave unit 40 may respond to the log-on request message directly with its identity, thus combining stages a) to c). Alternatively the newly installed slave unit 40 can detect that it has been logged-on to the master unit 10 when the master unit 10 first initiates communications with it. In other applications of the present invention, typically where a large number of similar but isolated communications networks exist and the total number of slave units is large, the master unit 10 may allocate each slave unit an abbreviated identity or address for the purpose of communications efficiency within the network rather than use the full identity of the slave unit. In this case, the master unit 10 will inform the newly installed slave unit 40 of this abbreviated identity as part of the log-on process.

In the case described above, the log-on request message and the response to it do not need any special structure other than being unique messages within the existing communications protocol. However, in many applications of the present invention, more than one newly installed slave unit may be present and in this case all the newly installed slave units would respond to the log-on request message causing message collisions.

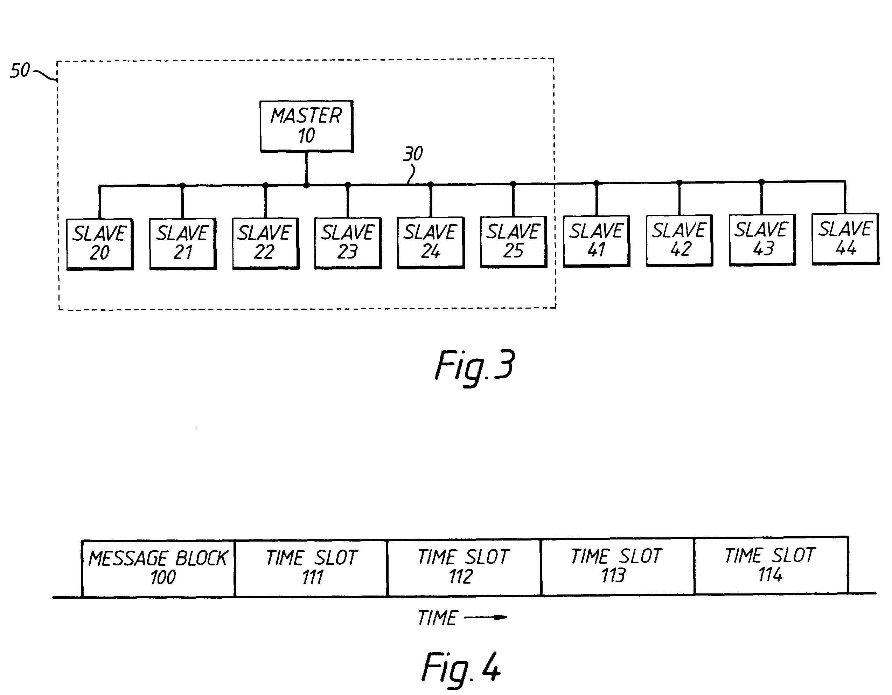

The present invention may conveniently be used to avoid such collisions. Referring to Figure 3, a network 50, as in Figure 1, is shown but with four newly installed slave units 41 to 44. If the log-on request message is arranged to have a format as shown in Figure 4, where the master unit 10 transmits the message block 100 of the log-on request message and this is followed by a number of time slots 111 to 115, then the firstly newly installed slave unit 41 can respond in the first time slot 111, the second newly installed slave unit 42 can respond in the second time slot 112 and similarly for the third and fourth newly installed slave units 43 and 44 can respond in the third and fourth time slots 113 and 114. The fifth time slot in this example is not used. In this way the master unit 10 can detect that four newly installed slave units are present.

In this case the acknowledgement from the master unit 10 to each of the four newly installed slave units 41 to 44 should be specific to each slave unit to give a positive log-on of each slave unit. This can be achieved in a number of ways depending on the actual application. If the response to the log-on request message includes the identity of the newly installed slave unit, the master unit 10 can use this directly to address each of the newly installed slave units 41 to 44 in turn. If the response to the log-on request message does not include the identity of the newly installed slave unit, then the master unit 10 can use the number of the time slot 111 to 114 in which each newly installed slave unit responded as a means of addressing the newly installed slave units for the log-on process.

In order for this aspect of the invention to work, the newly installed slave units 41 to 44 have to be instructed in some way as to which time slot to respond in. Since the object of the present invention is to make the log-on of newly installed slave units automatic, this instruction should be of a generic nature and built into each slave unit so that the slave unit can select the correct time slot without external intervention. This selection can be based on some aspect of the slave unit's identity, as in the example described above where the last digit of slave unit's identity defined the time slot, or it can be made on a random or pseudo-random basis.

In either case, if more than one newly installed slave unit is present, there is a finite probability that more than one newly installed slave unit will respond in a particular time slot. The probability can be reduced by increasing the number of time slots following the message block of the log-on request message and this can be optimised to suit the expected maximum number of newly installed slave units which could respond to a log-on request message. For example, in one application of the present invention for remote reading of electricity meters, one hundred or more time slots might be needed to accommodate the initialisation of all the newly installed slave units on a single network.

Increasing the number of time slots to accommodate the expected maximum number of newly installed slave units is, however, inefficient if this maximum condition occurs only rarely and most of the times that the log-on request message is sent by the master unit there are no newly installed slave units or only a small number of them. In such circumstances most of the time slots following the message block of the log-on request message will not be used and the time taken by these time slots is dead time which could be more effectively used. Also in some applications of the present invention, there may be a requirement to issue the log-on request message frequently in order to detect the presence of newly installed slave units as soon as possible after they are installed.

This dead time can be substantially reduced using another aspect of the present invention where the number of time slots following the message block 100 of the log-on request message is variable rather than fixed as described above. This can be accommodated by including in the message block 100 of the log-on request message information on the number of time slots available for a response. The master unit 10 can now issue on a regular basis log-on request messages with a small number of time slots, which will have a minimal dead time if there are no newly installed slave units to respond. In the event that a large number of newly installed slave units respond, most if not all of the time slots will be used and, on detecting this the master unit 10 can re-issue the log-on request message with a larger number of time slots.

Another aspect of the present invention relates to the case where two or more newly installed slave units respond to the log-on request message in the same time slot, but due to their location on the network, the response from one newly installed slave unit is stronger at the master unit than that from another. This can occur if one newly installed slave unit is close to the master unit and another is further away where the attenuation of the communications medium will cause a weaker signal to reach the master unit. In such cases, the master unit is likely to hear the newly installed slave unit which has the strongest response and not detect the other newly installed slave unit or slave units responding in the same time slot. To overcome this, the master unit can repeat the log-on request message when a response from one or more newly installed slave units has been received, and the relevant slave units logged-on to the network, to ensure that no other newly installed slave units with weaker signals are being masked.

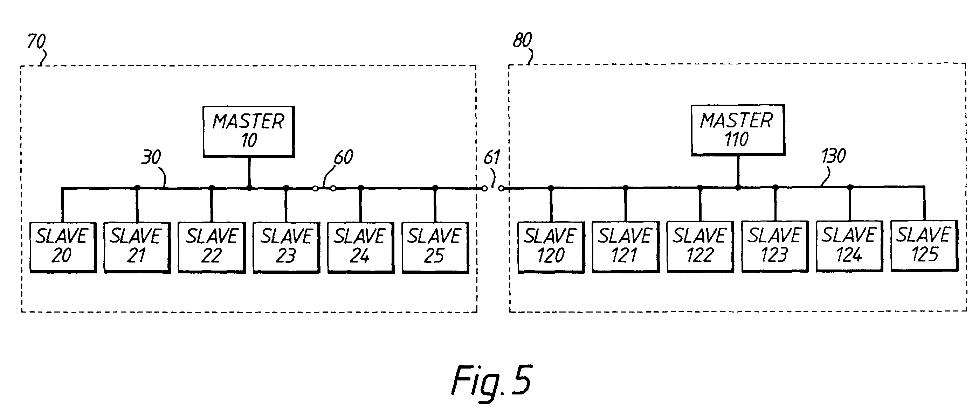

A final aspect of the present invention relates to its application where a number of adjacent but isolated communications networks exist as illustrated in Figure 5. This shows two similar communications networks, the first network 70 comprising a master unit 10, a number of slave units 20 to 25 with which the master unit 10 is already in communication via their communications medium 30, and the second network 80 comprising a master unit 110, a number of slave units 120 to 125 with which the master unit 110 is already in communication via their communications medium 130. If for example, for reasons unrelated to the operation of the communications on the two networks 70 and 80, the link 60 in the communications medium 30 is opened and the link 61 between the two networks 70, 80 is connected, the two slave units 24, 25 will no longer be able to communicate with their master unit 10. However, since they were already in communication with that master unit 10, they would not normally respond to a log-on request message from the master unit 110 on the new network 80, but that master unit 110 would not be aware of the existence of the slave units 24, 25 and would not initiate communications with them.

This can be resolved if the slave units 24, 25 after a period of time without any communications from their original master unit 10 automatically reset themselves back to the state as if they are newly installed slave units, ie. automatically log-off. The slave units 24, 25 will now respond to a log-on request message from the master unit 110 and be logged-on to the new network 80. Similarly the master unit 10 can, after a similar period of time without any response to its communications with the slaves 24, 25, delete them from its list of slave units to communicate with, ie. log-off the lost slave units 24, 25.

A refinement of this aspect is important if the master units 10, 110 are using abbreviated addressing for the slave units on each network. A finite probability exists that a slave unit which is moved from one network to another has the same abbreviated address on its old network as another on the new network. This would cause a clash between the two slave units with the same abbreviated address. This can be overcome if the two master units 10, 110 have their own identity which is transmitted as part of some or all messages on the network. The slave units which move between networks 24, 25 can now immediately recognise the change of identity between the master unit 110 on the new network 80 and the original master unit 10 on the old network 70, and automatically log-off without waiting for a period of time without communications from the original master unit 10.

It will readily be appreciated by those skilled in the art that there are alternative ways of implementing the present invention, which fall within the scope of the invention as defined in the following claims.

## Claims

1. A polled communications network comprising a master unit (10 )and a plurality of slave units (20-25; 40-44; 120-125), the master unit (10) being arranged to send messages to, and receive messages from the slave units (20-25; 40-44; 120-125), the master unit (10) is provided with means for issuing a log-on request message (100) which is received by the slave units (20-25; 40-44; 120-125), and each slave unit is provided with means for responding to the log-on request message (100), but only responds if the particular slave unit is newly installed on the network and has not communicated previously with the master unit (10), characterised in that the log-on request message (100) is followed by a plurality of time slots (111-114) in which the newly installed slave units can respond, and the newly installed slave units include means to randomly select a time slot in which to respond, and the number of time slots following the log-on request message (100) is varied according to the number of time slots in which a response was received in a previous log-on request message.

2. A polled communications network as claimed in Claim 1, wherein the master unit (10) uses the number of a time slot following the log-on request message to log-on the newly installed slave unit which responded in that time slot.

3. A polled communications network as claimed in Claim 1, wherein the master unit (10) uses the number of a time slot following the log-on request message to address the newly installed slave unit which responded in that time slot.

4. A polled communications network as claimed in Claims 1 to 3, wherein the master unit (10) repeats the log-on request message (100) following a response in more than a pre-defined number of time slots of a previous log-on request message.

5. A polled communications network as claimed in Claims 1 to 3, wherein the master unit (10) repeats the log-on request message following a response in more than a pre-defined percentage of the available time slots of a previous log-on request message.

6. A polled communications network as claimed in any preceding Claim, wherein the response from newly installed slave units to the log-on request message (100) is in the form of a carrier signal.

7. A polled communications network as claimed in Claim 6, wherein the carrier signal is modulated.

8. A polled communications network as claimed in any of the Claims 1 to 5, wherein the response from a newly installed slave unit to the log-on request message (100) is in the form of a message which does not identify the newly installed slave unit.

9. A polled communications network as claimed in any of the Claims 1 to 5, wherein the response from a newly installed slave unit to the log-on request message (100) is in the form of a message which includes the identity of the newly installed slave unit.

10. A polled communications network as claimed in any preceding Claim, wherein the master unit (10) repeats the log-on request message (100) following a response to a previous log-on request message.

11. A polled communications network as claimed in any preceding Claim, wherein the master unit (10) repeats the log-on request message (100) at intervals.

12. A polled communications network as claimed in any preceding Claim, wherein the master unit (10) issues each newly installed slave unit (40-44; 120-125) with an abbreviated address during the log-on process for subsequent communications.

13. A polled communications network as claimed in any preceding Claim, wherein the slave units have been moved between a plurality of communications networks (70, 80), loss of communications with the original master unit (10) is automatically detected and the slave units (20-25) subsequently respond to the log-on request message (100) generated by the master unit (110) of the new communications network.

14. A polled communications network as claimed in any preceding Claim, wherein when the slave units have been moved between a plurality of communications networks (70, 80) the slave units (20-25; 120-125) automatically detect the change in identity of the master unit (10; 110) and subsequently respond to the log-on request message (100) generated by the new master unit (110).

## Patentansprüche

1. Abgefragtes Kommunikationsnetz, mit einer Master-Einheit (10) und mehreren Slave-Einheiten (20-25; 40-44; 120-125), wobei die Master-Einheit (10) so beschaffen ist, daß sie Nachrichten an die Slave-Einheiten (20-25; 40-44; 120-125) sendet und von diesen Nachrichten empfängt, wobei die Master-Einheit (10) versehen ist mit einer Einrichtung zum Ausgeben einer Anmeldungsanforderungsnachricht (100), die von den Slave-Einheiten (20-25; 40-44; 120-125) empfangen wird, und wobei jede Slave-Einheit versehen ist mit einer Einrichtung zum Antworten auf die Anmeldungsanforderungsnachricht (100), wobei die Einrichtung nur antwortet, wenn die besondere Slave-Einheit neu im Netz installiert ist und nicht bereits vorher mit der Master-Einheit (10) kommuniziert hat, dadurch gekennzeichnet, daß der Anmeldungsanforderungsnachricht (10) mehrere Zeitschlitze (111-114) folgen, in denen die neu installierten Slave-Einheiten antworten können, und die neu insLallierten Slave-Einheiten Einrichtungen enthalten, um einen Zeitschlitz, in dem geantwortet werden soll, zufällig zu wählen, und die Anzahl der der Anmeldungsanforderungsnachricht (100) folgenden Zeitschlitze entsprechend der Anzahl der Zeitschlitze, in denen eine Antwort bei einer vorhergehenden Anmeldungsanforderungsnachricht empfangen wurde, verändert wird.

2. Abgefragtes Kommunikationsnetz nach Anspruch 1, in dem die Master-Einheit (10) die Nummer eines der Anmeldungsanforderungsnachricht folgenden Zeitschlitzes dazu verwendet, die neu installierte Slave-Einheit, die in diesem Zeitschlitz geantwortet hat, anzumelden.

3. Abgefragtes Kommunikationsnetz nach Anspruch 1, in dem die Master-Einheit (10) die Nummer eines der Anmeldungsanforderungsnachricht folgenden Zeitschlitzes verwendet, die neu installierte Slave-Einheit, die in diesem Zeitschlitz geantwortet hat, zu adressieren.

4. Abgefragtes Kommunikationsnetz nach einem der Ansprüche 1 bis 3, in dem die Master-Einheit (10) die einer Antwort folgende Anmeldungsanforderungsnachricht (100) in mehr als einer im voraus definierten Anzahl von Zeitschlitzen einer vorhergehenden Anmeldungsanforderungsnachricht wiederholt.

5. Abgefragtes Kommunikationsnetz nach irgendeinem der Ansprüche 1 bis 3, in dem die Master-Einheit (10) die einer Antwort folgende Anmeldungsanforderungsnachricht in mehr als einem im voraus definierten Prozentsatz der verfügbaren Zeitschlitze einer vorhergehenden Anmeldungsanforderungsnachricht wiederholt.

6. Abgefragtes Kommunikationsnetz nach irgendeinem vorangehenden Anspruch, in dem die Antwort von neu installierten Slave-Einheiten auf die Anmeldungsanforderungsnachricht (10) die Form eines Trägersignals hat.

7. Abgefragtes Kommunikationsnetz nach Anspruch 6, in dem das Trägersignal moduliert wird.

8. Abgefragtes Kommunikationsnetz nach irgendeinem der Ansprüche 1 bis 5, in dem die Antwort von einer neu installierten Slave-Einheit auf die Anmeldungsanforderungsnachricht (100) die Form einer Nachricht hat, die die neu installierte Slave-Einheit nicht identifiziert.

9. Abgefragtes Kommunikationsnetz nach irgendeinem der Ansprüche 1 bis 5, in dem die Antwort von einer neu installierten Slave-Einheit auf die Anmeldungsanforderungsnachricht (100) die Form einer Nachricht hat, die die Identität der neu installierten Slave-Einheit enthält.

10. Abgefragtes Kommunikationsnetz nach irgendeinem vorangehenden Anspruch, in dem die Master-Einheit (10) die Anmeldungsanforderungsnachricht (100) nach einer Antwort auf eine vorhergehende Anmeldungsanforderungsnachricht wiederholt.

11. Abgefragtes Kommunikationsnetz nach irgendeinem vorangehenden Anspruch, in dem die Master-Einheit (10) die Anmeldungsanforderungsnachricht (10) in Intervallen wiederholt.

12. Abgefragtes Kommunikationsnetz nach irgendeinem vorangehenden Anspruch, in dem die Master-Einheit (10) für jede neu installierte Slave-Einheit (40-44; 120-125) während des Anmeldungsprozesses für nachfolgende Kommunikationen eine abgekürzte Adresse ausgibt.

13. Abgefragtes Kommunikationsnetz nach irgendeinem vorangegangenen Anspruch, in dem dann, wenn die Slave-Einheiten zwischen mehreren Kommunikationsnetzen (70, 80) bewegt worden sind, ein Kommunikationsverlust mit der ursprünglichen Master-Einheit (10) automatisch erfaßt wird und die Slave-Einheiten (20-25) anschließend auf die von der Master-Einheit (110) des neuen Kommunikationsnetzes erzeugte Anmeldungsanforderungsnachricht (100) antworten.

14. Abgefragtes Kommunikationsnetz nach irgendeinem vorangehenden Anspruch, in dem die Slave-Einheiten (20-25; 120-125) dann, wenn sie zwischen mehreren Kommunikationsnetzen (70, 80) bewegt worden sind, automatisch die Änderung der Identität der Master-Einheit (10; 110) erfassen und anschließend auf die von der neuen Master-Einheit (110) erzeugte Anmeldungsanforderungsnachricht (100) antworten.

## Revendications

1. Réseau de communications à interrogation, comprenant une unité maîtresse (10) et plusieurs unités asservies (20-25 ; 40-44 ; 120-125), l'unité maîtresse (10) étant disposée afin qu'elle émette des messages vers les unités asservies (20-25 ; 40-44 ; 120-125) et reçoive des messages de celles-ci, l'unité maîtresse (10) ayant un dispositif destiné à émettre un message de demande de connexion (100) qui est reçu par les unités asservies (20-25 ; 40-44 ; 120-125), et chaque unité asservie étant munie d'un dispositif destiné à répondre au message de demande de connexion (100) mais à ne répondre que si l'unité asservie particulière est nouvellement installée sur le réseau et n'a pas déjà communiqué avec l'unité maîtresse (10), caractérisé en ce que le message de demande de connexion (100) est suivi de plusieurs tranches temporelles (111-114) dans lesquelles les unités asservies nouvellement installées peuvent répondre, et les unités asservies nouvellement installées comportent un dispositif de sélection aléatoire d'un tranche temporelle pour répondre, et le nombre de tranches temporelles suivant le message de demande de connexion (100) varie avec le nombre de tranches temporelles dans lequel une réponse a été reçue dans un message de demande de connexion précédent.

2. Réseau de communications à interrogation selon la revendication 1, dans lequel l'unité maîtresse (10) utilise le numéro d'une tranche temporelle suivant le message de demande de connexion pour connecter l'unité asservie nouvellement installée qui a répondu dans cette tranche temporelle.

3. Réseau selon la revendication 1, dans lequel l'unité maîtresse (10) utilise le numéro d'une tranche temporelle qui suit le message de demande de connexion pour adresser l'unité asservie nouvellement installée qui a répondu dans cette tranche temporelle.

4. Réseau selon les revendications 1 à 3, dans lequel l'unité maîtresse (10) répète le message de demande de connexion (100) qui suit une réponse dans un nombre de tranches temporelles d'un message précédent de demande de connexion supérieur à un nombre prédéfini.

5. Réseau selon les revendications 1 à 3, dans lequel l'unité maîtresse (10) répète le message de demande de connexion après une réponse dans un pourcentage des tranches temporelles disponibles d'un message précédent de demande de connexion supérieur à un pourcentage prédéfini.

6. Réseau selon l'une quelconque des revendications précédentes, dans lequel la réponse des unités asservies nouvellement installées au message de demande de connexion (100) est sous forme d'un signal de porteuse.

7. Réseau selon la revendication 6, dans lequel le signal de porteuse est modulé.

8. Réseau selon l'une quelconque des revendications 1 à 5, dans lequel la réponse provenant d'une unité asservie nouvellement installée au message de demande de connexion (100) est sous forme d'un message qui n'identifie pas l'unité asservie nouvellement installée.

9. Réseau selon l'une quelconque des revendications 1 à 5, dans lequel la réponse d'une unité asservie nouvellement installée au message de demande de connexion (100) est sous forme d'un message qui comprend l'identité de l'unité asservie nouvellement installée.

10. Réseau selon l'une quelconque des revendications précédentes, dans lequel l'unité maîtresse (10) répète le message de demande de connexion (100) après une réponse à un message de demande de connexion précédent.

11. Réseau selon l'une quelconque des revendications précédentes, dans lequel l'unité maîtresse (10) répète le message de demande de connexion (100) à certains intervalles.

12. Réseau selon l'une quelconque des revendications précédentes, dans lequel l'unité maîtresse (10) transmet à chaque unité asservie nouvellement installée (40-44 ; 121-125) une adresse abrégée pendant l'opération de connexion, pour l'utilisation dans les communications ultérieures.

13. Réseau selon l'une quelconque des revendications précédentes, dans lequel, lorsque les unités asservies ont été déplacées entre plusieurs réseaux de communications (70, 80), la perte de communication avec l'unité maîtresse originale (10) est détectée automatiquement, et les unités asservies (20-25) répondent ensuite au message de demande de connexion (100) créé par l'unité maîtresse (110) du nouveau réseau de communications.

14. Réseau de communications à interrogation selon l'une quelconque des revendications précédentes, dans lequel, lorsque les unités asservies ont été déplacées entre plusieurs réseaux de communications (70, 80), les unités asservies (20-25 ; 120-125) détectent automatiquement le changement d'identité de l'unité maîtresse (10 ; 110) puis répondent au message de demande de connexion (100) créé par la nouvelle unité maîtresse (110).
